# EUROPEAN PATENT SPECIFICATION

(11) **EP 2 321 124 B1**
(45) Date of publication and mention of the grant of the patent: **05.09.2012**
(21) Application number: 09790475.9
(22) Date of filing: 15.07.2009
(51) Int. Cl.: B32B 27/08, B32B 27/34, B65D 77/00, B65D 81/00, B32B 27/30

(54) **POLYAMIDE STRUCTURES FOR THE PACKAGING OF MOISTURE CONTAINING PRODUCTS**
POLYAMIDSTRUKTUREN FÜR DIE VERPACKUNG VON FEUCHTIGKEITSHALTIGEN PRODUKTEN
STRUCTURES DE POLYAMIDE POUR L EMBALLAGE DE PRODUITS CONTENANT DE L HUMIDITÉ

(30) Priority: 18.07.2008 US 81795 P; 06.01.2009 US 349357
(43) Date of publication of application: 18.05.2011
(73) Proprietor: Bemis Company, Inc, Neenah, WI 54956 (US)
(72) Inventor: SCHAEFER, Suzanne, E., Appleton Wisconsin 54913 (US); BLEMBERG, Robert, J., Appleton Wisconsin 54914 (US)
(74) Representative: Hakkila, Maini Annika
(86) International application number: PCT/US2009/050712
(87) International publication number: WO 2010/009245

(56) References cited:
- EP-A1- 0 465 681
- EP-A1- 1 122 060
- EP-A1- 1 749 656
- WO-A2-2004/005021
- CA-A1- 1 240 247
- DE-A1- 10 227 580
- US-A- 4 997 710
- US-A1- 2005 069 719

## Description

The invention relates to polyamide containing structures for packaging cheese or other products containing moisture.

Moisture-containing products, such as cheese, are often packaged in film laminations comprising polyethylene terephthalate (PET) in the outer layer. A disadvantage to employing PET is that its abuse resistance is not as great as that of other materials, plus it is not as formable as other materials, such as polyamides. Therefore, packaging comprising PET in the outer layer may be somewhat susceptible to cracks and tears during handling, transportation or storage.

In contrast to certain packages comprising PET, employing a polyamide, such as nylon, film as the outer layer of a package offers a dimensionally stable print surface as well as abuse and flex-crack resistance. The combination of a polymeric coating applied to a nylon film, for example a biaxially oriented nylon (BON) film, results in a structure that is softer and more formable than typical film laminations. The ability also exists to use a multilayer cast film such as Nylon / Nylon / Ethylene Vinyl Alcohol Copolymer / Nylon / Nylon with a polymeric coating which would also offer softness/formability advantages. Such a multilayer cast film is described in U.S. Patent No. 7,384,679, which is incorporated herein by reference in its entirety.

Unfortunately, mottling can occur when such nylon is used in packages for moisture containing products, for example, cheese. Moisture from the products diffuses through the package into the nylon layer. The nylon absorbs the water, creating the mottling and swelling in size to create a gap between the package and the products. Such mottling may appear over time, such as after the package is shipped for sale. Accordingly, absorption of water from moisture containing products results in a poor package appearance and increased potential for product mold, because mold is better able to grow when there is air in contact with a moisture containing product. Indeed, the tightness of a package around a moisture containing product may be more critical to preventing mold growth than the extent of the oxygen barrier characteristics of a package.

Aspects of the invention are directed to packages for moisture containing products, such as cheese. The packages comprise a polyamide layer which may be extrusion coated with an ethylene vinyl alcohol (EVOH) layer, a sealant layer, and a moisture barrier layer disposed between the sealant layer and the polyamide and EVOH layers. The moisture barrier layer comprises a blend of high density polyethylene (HDPE) and low density polyethylene (LDPE). In an embodiment, the polyamide comprises a biaxially oriented nylon. The package film has a thickness of less than 88.9 microns (3.5 mils) and a moisture vapor transmission rate (MVTR) at 37.8 °C (100 °F) and 90% relative humidity of less than 9.15 g/m² (0.59 g/100 in²) per 24 hours. The moisture barrier layer prevents the package from forming a mottled appearance due to absorption of moisture into the polyamide layer.

In an alternate embodiment, the packages comprise an encapsulated barrier multilayer film structure and a sealant layer. The encapsulated barrier may comprise the following layers: nylon / nylon / ethylene vinyl alcohol / nylon / nylon.

### BRIEF DESCRIPTION OF THE DRAWINGS

Fig. 1 illustrates a cross-section of a multilayer polymeric film comprising four layers.
Fig. 2 illustrates a cross-section of a multilayer polymeric film comprising eight layers.
Fig. 3 illustrates a cross-section of a multilayer polymeric film comprising an encapsulated barrier structure.

It was discovered that the use of a moisture barrier layer including HDPE between a polyamide layer and a sealant surface layer eliminates the mottled appearance often associated with packaging of high moisture products, such as cheese having a polyamide layer. It was further discovered that the use of a blended polyethylene moisture barrier layer comprising 40 wt. % or less of high density polyethylene (HDPE) is also effective to eliminate the mottled appearance of the package.

As used herein, the term "high moisture product" refers to products that contain between about 25% and about 50% by weight moisture. For instance, the Code of Federal Regulations Title 21, Volume 2, Parts 100-169, defines cheddar cheese as containing a maximum of 39% moisture, provolone cheese as containing a maximum of 45% moisture, swiss cheese as containing a maximum of 41% moisture, colby as containing a maximum of 40% moisture, and high moisture jack cheese as containing between 44% and 50% moisture.

A layer of HDPE blend, may be used in combination with EVOH to provide a restrictive barrier for both moisture and oxygen in film structures utilizing polyamide, for instance biaxially oriented nylon. This material combination provides a structure with excellent appearance while still providing the barrier and physical property characteristics needed to successfully maintain freshness of the packaged moisture containing products, and without mottling of the polyamide layer over time.

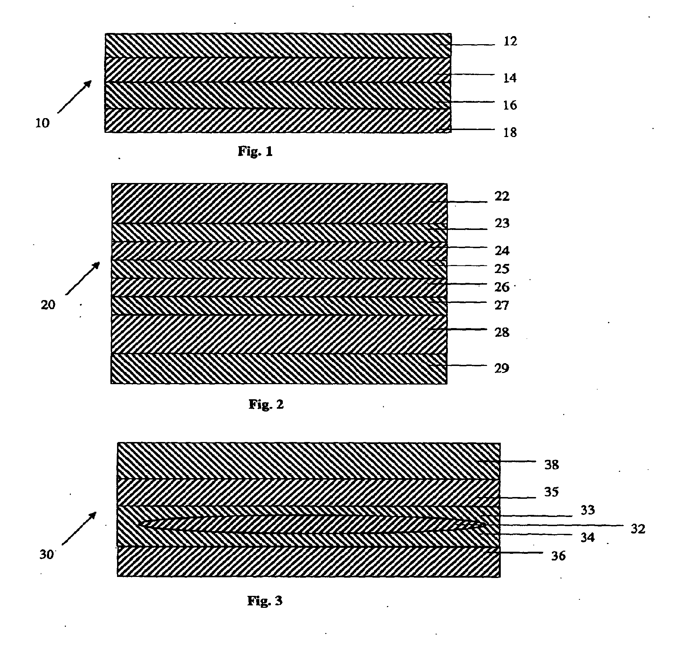

The packaging film contains at least a polyamide layer, a moisture barrier layer, and a sealant layer. In certain embodiments, the packaging film further comprises an EVOH layer, as discussed above. Referring to Fig. 1, in accordance with one aspect of the invention, a four layer multilayer film 10 comprises layers 12, 14, 16 and 18, and has the following structure, from outer skin layer to inner sealant layer: polyamide (12) / EVOH (14) / moisture barrier (16) / sealant (18). The structure of the packaging film may contain these and other layers in various arrangements. Importantly, a moisture barrier layer is placed between the sealant layer and the polyamide layer (and EVOH layer if present).

In certain embodiments, the outer layer of the film is a print layer and comprises biaxially oriented nylon. In addition to a printable surface, this nylon layer provides abuse resistance and dimensional stability. The biaxially oriented nylon is uncoated and generally laminated to the next layer in the film structure. The nylon layer may comprise any of various nylons commonly used in the art of making polymeric films, including nylon 6, nylon 6,6, nylon 6,66, nylon 12 or amorphous nylon. In certain embodiments, the nylon used in the film structure is nylon 6. However, in an alternate embodiment the nylon comprises an amorphous nylon copolymer that is blended with one or more various other nylons. Amorphous nylon copolymers are characterized by a lack of crystallinity, which can be shown by the lack of an endotherm crystalline melting point in a Differential Scanning Calorimeter ("DSC") test ASTM D-3417.

The nylon layer may be oriented according to known methods in the art, such as by heating the nylon layer, subjecting it to drawing (i.e., stretching) in the machine direction (MD) and in the transverse direction (TD), and heat-setting the drawn film. The nylon layer may be oriented in both directions, thus becoming biaxially oriented. Typically, a 12.2 microns (48 gauge) biaxially oriented nylon layer according to embodiments of the invention exhibits dimensional stability in the machine direction of less than about 2.5% and in the transverse direction of less than about 1.5%, tested at 160 °C (320° F) for five minutes. This is similar to the dimensional stability of a 12.2 microns (48 gauge) PET film that has been corona treated on one side, which has a dimensional stability in the machine direction of about 2.2% and in the transverse direction of about 0.8%, tested at 150 °C (302° F) for 30 minutes. The dimensional stability of a 14.0 microns (55 gauge) biaxially oriented polypropylene film, in contrast, may be about 13% in the machine direction and about 11% in the transverse direction, tested at 135 °C (275° F) according to ASTM method D-2457.

The moisture barrier layer of the multilayer film structure comprises polyethylene, including high density polyethylene (HDPE). As used herein, the terms "high density polyethylene" and "HDPE" refer to ethylene alpha-olefin copolymers or ethylene homopolymers having a density of greater than about 0.94 g/cm³. HDPE can be produced with several classes of catalysts, such as Ziegler-Natta catalysts and single site metallocene type catalysts. In certain embodiments, the density of the HDPE resin can range from about 0.941 to about 0.960 g/cm³. In an embodiment, the HPDE employed is a high moisture barrier high density polyethylene, such as the HDPE available from Nova Chemicals. Nova-SURPASS^{®} HDPE includes high density polyethylene and a nucleating agent to achieve the moisture barrier and other physical properties. Because of the increased moisture barrier, a thinner layer of HDPE may be used to provide the same moisture vapor transmission rate, and thus the HDPE portion of the structure can be downgauged. The moisture barrier layer comprising high moisture barrier HDPE may have a thickness of less than about 20.3 microns (0.8 mils), for example about 12.2 microns (0.48 mils). In certain aspects of the invention, the HDPE buried layer may have a thickness as low as 7.6 microns (0.3 mils).

The moisture barrier layer further comprises low density polyethylene (LDPE). As used herein, the terms "low density polyethylene" and "LDPE" refer to branched ethylene homopolymers having a density of between about 0.915 g/cm³ and 0.925 g/cm³. The low density of LDPEs is typically due to the presence of branching off of the main polyethylene chain. The density of the LDPE may be about 0.918 g/cm³. In certain embodiments of the invention comprising a blend of HDPE and LDPE in the moisture barrier layer, the multilayer film exhibits a moisture vapor transmission rate (MVTR) of less than about 9.15 g/m² (0.59 g/100 in²) per 24 hours. In other embodiments, the multilayer film exhibits a MVTR of less than 6.98 g/m² (0.45 g/100 in²) per 24 hours, while in yet further embodiments, the multilayer film exhibits a MVTR of less than about 4.65 g/m² (0.30 g/100 in²) per 24 hours.

The moisture barrier layer must provide sufficient protection to prevent moisture from reaching the outer layers of the multilayer film, e.g., the polyamide layer and the EVOH layer. As discussed above, the moisture barrier layer comprises HDPE blends. Such blends include at least 20 wt. % HDPE, at least 30 wt. % HDPE, at least 35 wt. % HDPE, or at least 40 wt. % HDPE. The remaining amount of the blend may be LDPE, or linear low density polyethylene (LLDPE), for example. In certain embodiments, the blend comprises less than about 40 wt. % HDPE. The ratio of HDPE to LDPE may be adjusted as necessary depending on the coating weight. Generally any suitable coating weight of the HDPE blend layer may be used such as 16.27 g/m² (10 pounds per ream), 24.41 g/m² (15 pounds per ream), 32.54 g/m² (20 pounds per ream), or 40.68 g/m² (25 pounds per ream), or any value in between. In certain embodiments, the moisture barrier layer comprises between about 30% and about 45% of the total multilayer package film thickness. In particular embodiments, the moisture barrier layer may have a thickness of between about 20.3 microns (0.8) and about 33.0 microns (1.3 mils).

An ethylene vinyl alcohol (EVOH) layer may be included in embodiments of the film as an oxygen barrier and a flavor barrier. The EVOH layer is generally placed between the polyamide layer and the moisture barrier layer; however, the EVOH layer may also be the outer layer outside the polyamide layer. In certain embodiments of the invention, the multilayer film comprising an EVOH layer exhibits an oxygen transmission rate (OTR) of less than about 24.80 cc/m² (1.60 cc/100 in²) per 24 hours at 85% relative humidity in and out. In other embodiments, the multilayer film exhibits an OTR of less than about 15.50 cc/m² (1.00 cc/100 in²), or between about 9.67 and 11.32 cc/m² (0.63 and about 0.73 cc/100 in²) per 24 hours at 85% relative humidity in and out. The EVOH layer may be coextruded with other layers, such as the moisture barrier layer. In embodiments of the invention, the EVOH layer may also encapsulate layers of the multilayer film to provide further barrier protection at the edges of the multilayer film package. Effective barrier properties may be obtained with thin layers of EVOH, such as about 2.54 microns (0.1 mils) or less. In certain embodiments, the EVOH layer is 1.78 microns (0.07 mils) or less.

The multilayer film structure includes a sealant layer, which allows the film to be sealed to its own outer surface layer or to another multilayer film structure to form a package. The sealant layer may be any suitable sealant layer, such as ethylene vinyl acetate (EVA). In certain embodiments, the package may be a bag or a pouch, such as for containing more than one moisture containing product and having a closure that can be opened and reclosed. In an embodiment, the sealant layer is heat sealable. The term "heat sealable," as used herein, means sealable or bondable by heat however obtained, for example, by induction or magnetic, ultrasonic, radio frequency, light or other energy sources which cause the materials to bond, fuse or otherwise seal. Such heat sealable materials usually are thermoplastic film forming polymers, are well-known in the art, and include an ionomer, such as Surlyn^{®}, LLDPE, including all linear polyethylenes with a density of up to about 0.95 g/cc, LDPE, ethylene vinyl acetate (EVA), polybutylene, polypropylene-based plastomers, homopolymers or random copolymers, medium density polyethylene (MDPE), high density polyethylene (HDPE), ultra low density polyethylene, very low density polyethylene, olefins catalyzed by a single site catalyst such as metallocene, EMA, EAA, ethylene normal-butyl acrylate (ENBA), copolymers of ethylene and ethylenically unsaturated comonomer selected from the group consisting of carboxylic acids and esters, salts and anhydrides thereof, ethylene methacrylic acid copolymer, or a blend of any of these polymers. The sealant layer may also include additives for high speed processing, such as slip additive and antiblock compound. Further, the sealant layer may comprise materials to provide a peelable seal, for instance any suitable compound that is incompatible with the selected sealant materials. In certain embodiments, the sealant layer may have a thickness of about 19.05 microns (0.75 mils) or less. In particular embodiments, the sealant layer may be extrusion coated to the other layers of the multilayer film structure, which provides excellent adhesion of the sealant layer to the structure. In such embodiments, a sealant layer comprising a high melt index resin is employed to provide sufficient flow of the resin during an extrusion coating process.

Various layers of the multilayer film structure may be adhered together with tie, or adhesive, layers. In an embodiment, a tie or adhesive layer may be a coextrusion of low density polyethylene (LDPE) and ethylene acrylic acid copolymer (EAA) or an anhydride modified polyethylene. In certain embodiments, the tie or adhesive layer comprises maleic anhydride modified polyethylene copolymer, such as ethylene vinyl acetate (EVA)-based or linear low density polyethylene (LLDPE)-based adhesive. The tie or adhesive layer may alternatively comprise any of the various other polymeric adhesives commonly used in the art of making multilayer films.

In embodiments of the invention, the polyamide layer may be provided by an encapsulated barrier structure, such as the structure disclosed in commonly owned U.S. Patent No. 7,384,679. Referring to Fig. 3, an encapsulated barrier structure 30 may comprise a buried layer 32 of any suitable barrier material, for example a blend of a polyamide and ethylene vinyl alcohol. The polyamide may be present in the blend in an amount of about 15-40% by weight. The structure may further comprise an encapsulation layer 33 and 34 on each side of the buried layer, comprising a polyamide in each encapsulation layer. Optionally, the structure may also comprise an outer encapsulation layer 35 and 36 on each side of encapsulation layers 33 and 34. The outer encapsulation layers may also comprise a polyamide material, either the same or different from the polyamide included in the encapsulation layers 33 and 34. Accordingly, the barrier layer 32 is encapsulated by at least two encapsulation layers. If such a encapsulated barrier structure is employed, in certain embodiments of the invention, it may replace both the outer polyamide layer and the buried moisture barrier layer of the present invention. Thus, the barrier structure may include only a sealant layer 38 in order to form a completed multilayer packaging structure. In such embodiments, the outer encapsulation layers 35 and 36 and/or the sealant layer 38 may act as moisture barrier layers to prevent mottling of the multilayer film.

Multilayer film structures of embodiments of the invention may be made via cast coextrusion, extrusion coating and/or extrusion lamination, adhesive lamination, blown-film coextrusion or water-quenched coextrusion or any other film-making method generally known to those having ordinary skill in the art. As noted above, the polyamide layer may be laminated to the other layers, which may be prepared by numerous methods known in the art. Embodiments of the multilayer film package structure may have a total film thickness of less than about 88.9 microns (3.5 mils).

Examples of suitable multilayer films for use with moist products include the following:
Biaxially Oriented Nylon / LDPE / (LDPE-HDPE / LLDPE-Tie / EVOH / LLDPE-Tie / Sealant). The multilayer film may be a blown film or a water cooled film.
Biaxially Oriented Nylon/Adhesive / (LDPE-HDPE / LLDPE-Tie / EVOH / LLDPE-Tie / Sealant). The multilayer film may be a blown film or a water cooled film.
Biaxially Oriented Nylon / (HDPE-LDPE / Tie / EVOH / Tie / HDPE-LDPE) EVOH Encap / Sealant
Biaxially Oriented Nylon / (LDPE / Tie / EVOH / Tie / LDPE) EVOH Encap/ HDPE-LDPE / Sealant
Nylon / EVOH / Nylon / Tie / LDPE / Biaxially Oriented Nylon / LDPE / HDPE-LDPE / Sealant
Nylon / EVOH / Nylon / Tie / LDPE / Biaxially Oriented Polypropylene / LDPE / HDPE-LDPE / Sealant

The combination of materials allows the use of nylon that is extrusion coated for greater formability/flexibility and increased abuse resistance without creating mottling or other negative appearance issues during storage of products that contain moisture.

### EXAMPLES

The following examples are illustrative of embodiments of the present invention, as described above, and are not meant to limit the invention in any way.

### Example 1

Referring to Fig. 2, an eight layer multilayer film structure 20 was prepared having a biaxially oriented nylon outer layer 22, a five-layer EVOH encapsulate (comprising a first LDPE layer 23, a first tie layer 24, an EVOH layer 25, a second tie layer 26, and a second LDPE layer 27), a moisture barrier layer 28 comprising a blend of HDPE and LDPE, and an EVA sealant layer 29. The tie layer was Bynel^{®}, which is available from DuPont™. The film had an average thickness of 77.47 microns (3.05 mils) and the thickness of each layer was as follows: 16.0 microns (0.63 mils) biaxially oriented nylon / 4.83 microns (0.19 mils) LDPE / 1.27 microns (0.05 mils) tie / 4.57 microns (0.18 mils) EVOH / 1.02 microns (0.04 mils) tie / 5.33 microns (0.21 mils) LDPE / 29.96 microns (1.14 mils) HDPE-LDPE blend / 16.0 microns (0.63 mils) EVA. The HDPE-LDPE blend comprised 60% by weight LDPE and 40% by weight HDPE. The multilayer film was tested for various physical properties, which are reported in Table 1 below. The multilayer film structure of Example 1 exhibited an average MVTR of 4.05 g/m² (0.261 g/ 100 in²) per 24 hours and an average OTR of 16.74 cc/m² (1.08 cc/100 in²) per 24 hours at 85% relative humidity in and out.

### Example 2

An eight layer multilayer film structure was prepared having a biaxially oriented nylon outer layer, a five-layer EVOH encapsulate (comprising a first LDPE layer 23, a first tie layer 24, an EVOH layer 25, a second tie layer 26, and a second LDPE layer 27), a moisture barrier layer 28 comprising a blend of HDPE and LDPE, and an EVA sealant layer 29. The film had an average thickness of 66.55 microns (2.62 mils) and the thickness of each layer was as follows: 11.18 microns (0.44 mils) biaxially oriented nylon / 4.32 microns (0.17 mils) LDPE / 1.02 microns (0.04 mils) tie / 3.81 microns (0.15 mils) EVOH / ; 1.02 microns (0.04 mils) tie / 4.32 microns (0.17 mils) LDPE / 29.21 microns (1.15 mils) HDPE-LDPE blend / 11.18 microns (0.44 mils) EVA The HDPE-LDPE blend comprised 60% by weight LDPE and 40% by weight HDPE. The multilayer film was tested for various physical properties, which are reported in Table 1 below. The multilayer film structure of Example 2 exhibited an average MVTR of 4.28 g/m² (0.276 g/100 in²) per 24 hours and an average OTR of 24.03 cc/m² (1.55 cc/100 in²) per 24 hours at 85% relative humidity in and out.

### Example 3

An eight layer multilayer film structure was prepared having a biaxially oriented nylon outer layer, a layer of LDPE, a moisture barrier layer 28 comprising a blend of HDPE and LDPE, a first LLDPE-tie layer, an EVOH layer, a second LLDPE-tie layer, and a polyolefin plastomer (POP) sealant layer. The film had an average thickness of 66.55 microns (2.62 mils) and the thickness of each layer was as follows: 12.95 microns,(0.51 mils) biaxially oriented nylon / 10.67 microns (0.42 mils) LDPE / 21.59 microns (0.85 mils) HDPE-LDPE blend / 2.54 microns (0.10 LLDPE-tie / 2.29 microns (0.09 mils) EVOH / 3.30 microns (0.13 mils) LLDPE-tie / 13.21 microns (0.52 mils) POP. The HDPE-LDPE blend comprised 49% by weight HDPE, 49% by weight LDPE, and 2% by weight AntiBlock Additive. The multilayer film was tested for various physical properties, as shown in Table 1. Example 3 exhibited an average MVTR of 4.46 g/m² (0.288 g/100 in²) per 24 hours and an average OTR of 15.50 cc/m² (1.00 cc/100 in²) per 24 hours at 85% relative humidity in and out.

### Comparative Example 4

A seven layer multilayer film structure was prepared having a biaxially oriented nylon outer layer, a five-layer EVOH encapsulate (comprising a first LDPE layer, a first tie layer, an EVOH layer, a second tie layer, and a second LDPE layer), and an EVA sealant layer. The film had an average thickness of 77.72 microns (3.06 mils) and the thickness of each layer was as follows: 14.22 microns (0.56 mils) biaxially oriented nylon / 4.57 microns (0.18 mils) LDPE / 1.78 microns (0.07 mils) tie / 2.29 microns (0.09 mils) EVOH / 4.06 microns (0.16 mils) tie / 5.33 microns (0.21 mils) LDPE / 45.47 microns (1.79 mils) EVA. The multilayer film was tested for various physical properties, as shown in Table 1 below. Comparative Example 4 exhibited an average MVTR of 8.37 g/m² (0.54 g/100 in²) per 24 hours and an average OTR of 21.86 cc/m² (1.41 cc/100 in²) per 24 hours at 85% relative humidity in and out. The comparative example differed from Example 3 primarily by not containing a moisture barrier layer, and had an average MVTR that was 3.91 g/m² (0.252 g/100 in²) per 24 hours greater than that of Example 3.

### Example 5

An eight layer multilayer film structure was prepared having a biaxially oriented nylon outer layer, a five-layer EVOH encapsulate (comprising a first LDPE-HDPE blended layer comprised of 60% by weight LDPE and 40% by weight HDPE, a first tie layer, an EVOH layer, a second tie layer, and a second LDPE-HDPE blended layer comprised of 60% by weight LDPE and 40% by weight HDPE), a moisture barrier layer comprising a blend of 40% by weight HDPE and 60% by weight LDPE, and an EVA sealant layer. The film had an average thickness of 66.55 microns (2.62 mils) and the thickness of each layer was as follows: 12.19 microns (0.48 mils) biaxially oriented nylon / 6.86 microns (0.27 mils) LDPE / 3.05 microns (0.12 mils) tie / 2.24 microns (0.088 mils) EVOH / 3.05 microns (0.12 mils) tie / 5.33 microns (0.21 mils) LDPE / 31.24 microns (1.23 mils) HDPE-LDPE blend / 17.27 microns (0.68 mils) EVA. The multilayer film was tested for various physical properties, which are reported in Table 1 below. The multilayer film structure of Example 5 exhibited an average MVTR of 3.35 g/m² (0.216 g/100 in²) per 24 hours and an average OTR of 11.21 cc/m² (0.723 cc/100 in²) per 24 hours at 85% relative humidity in and out.

### Comparative Example 7

An eight layer multilayer film structure was prepared having a polyethylene terephthalate (PET) outer layer, a five-layer EVOH encapsulate (comprising a first LDPE layer, a first tie layer, an EVOH layer, a second tie layer, and a second LDPE layer), an oriented polypropylene layer (OPP) and an EVA sealant layer. The film had an average thickness of 77.47 microns (3.05 mils) and the thickness of each layer was as follows: 9.14 microns (0.36 mils) PET / 14.15 g/m² (8.7 pounds per ream) EVOH encapsulate / 13.97 microns (0.55 mils) OPP / 34.17 g/m² (21 pounds per ream) EVA. The multilayer film was tested for various physical properties, as shown in Table 1 below. Comparative Example 8 exhibited an average MVTR of 4.71 g/m² (0.304 g/100 in²) per 24 hours and an average OTR of 31.47 g/m² (2.03 cc/100 in²) per 24 hours at 85% relative humidity in and out. The comparative example is representative of a typical multilayer film structure employed to package moisture containing products. Although the structure of Comparative Example 7 exhibited an acceptable MVTR, due to the presence of the PET layer, it does not provide the same formability to provide as tight of a fit around a product inside the package as other materials.

### Comparative Example 8

An eight layer multilayer film structure was prepared having a polyethylene terephthalate (PET) outer layer, a five-layer EVOH encapsulate (comprising a first LDPE layer, a first tie layer, an EVOH layer, a second tie layer, and a second LDPE layer), an oriented polypropylene layer (OPP) and an EVA sealant layer. The film had an average thickness of 83.31 microns (3.28 mils) and the thickness of each layer was as follows: 12.19 microns (0.48 mils) PET / 13.34 g/m² (8.2 pounds per ream) EVOH encapsulate / 13.97 microns (0.55 mils) OPP / 34.17 g/m² (21 pounds per ream) EVA. The multilayer film was tested for various physical properties, as shown in Table 1 below. Comparative Example 8 exhibited an average MVTR of 4.15 g/m² (0.268 g/100 in²) per 24 hours and an average OTR of 18.14 cc/m² (1.17 cc/100 in²) per 24 hours at 85% relative humidity in and out. Comparative Example 8 mainly differs from Comparative Example 7 by comprising a greater thickness of the PET layer and a slightly thinner EVOH encapsulate: 12.19 microns (0.48 mils) PET and 13.34 g/m² (8.2 pounds per ream) EVOH encapsulate as opposed to the 9.14 microns (0.36 mils) PET and 14.15 g/m² (8.7 pounds per ream) of Comparative Example 7. The structure of Comparative Example 8, having a thicker PET layer, exhibited a lower MVTR than the structure of Comparative Example 7, thus providing a better moisture barrier than that of Comparative Example 7.

### Comparative Example 9

An eight layer multilayer film structure was prepared having a polyethylene terephthalate (PET) outer layer, a five-layer EVOH encapsulate (comprising a first LDPE layer, a first tie layer, an EVOH layer, a second tie layer, and a second LDPE layer), a third LDPE layer and an EVA sealant layer. The film had an average thickness of 83.3) microns (3.28 mils) and the thickness of each layer was as follows: 12.19 mircons (0.48 mils) PET / 24.21 g/m² 15 pounds per ream) EVOH encapsulate / 24 .41 g/m² (15 pounds per ream) LDPE / 11.39 g/m² (7 pounds per ream) EVA. The multilayer film was tested for various physical properties, as shown in Table 1 below. Comparative Example 9 exhibited an average MVTR of 3.92 g/m² (0.253 g/100 in²) per 24 hours and an average OTR of 11.01 cc/m² (0.71 cc/100 in²) per 24 hours at 85% relative humidity in and out. Comparative Example 9 mainly differs from Example 5 by comprising a PET outer layer instead of a nylon outer layer and a thinner EVA sealant layer: 11.39 g/m² (7 pounds per ream) EVA as opposed to the 19.52 g/m² (12 pounds per ream) of Example 5. The structure of Comparative Example 9, having a PET layer, exhibited a faster MVTR (3.92 g/m² (0.253 g/100 in²) per 24 hours) than the structure of Example 5 (3.35 g/m² (0.216 g/100 in²) per 24 hours), thus providing a poorer moisture barrier than that of Example 5.

### Comparative Example 10

An eight layer multilayer film structure was prepared having a polyethylene terephthalate (PET) outer layer, a five-layer EVOH encapsulate (comprising a first LDPE layer, a first tie layer, an EVOH layer, a second tie layer, and a second LDPE layer), a third LDPE layer and an EVA sealant layer. The film had an average thickness of 85.34 microns (3.36 mils) and the thickness of each layer was as follows: 9.14 microns (0.36 mils) PET / 13.34 g/m² (8.2 pounds per ream) EVOH encapsulate / 32.54 g/m² (20 pounds per ream) LDPE / 19.52 g/m² (12 pounds per ream) EVA. The multilayer film was tested for various physical properties, as shown in Table 1 below. Comparative Example 11 exhibited an average MVTR of 4.31 g/m² (0.278 g/100 in²) per 24 hours and an average OTR of 22.32 cc/m² (1.44 cc/100 in²) per 24 hours at 85% relative humidity in and out. Comparative Example 10 mainly differs from Comparative Example 7 by comprising an LDPE layer instead of an OPP layer and a thinner EVA sealant layer: 19.52 g/m² (12 pounds per ream) EVA as opposed to the 34.17 g/m² (21 pounds per ream) EVA of Comparative Example 7. The structure of Comparative Example 10 exhibited a slower MVTR than the structure of Comparative Example 7, thus providing a better moisture barrier than that of Comparative Example 7, with the use of LDPE in place of OPP.

**Table 1. Structure and physical properties of multilayer film structures.**

| Structure | MVTR g/m² (g/100 in²) | Gauge microns (mils) | OTR cc/m² (cc/ 100 in²) | 1% Secant Modulus kPa (psi) | | Coefficient of Friction (kᵢ, k_{f}) | | Tear N (lb/in) | | Stiffness (g) | | Puncture J (lbs) |
|---|---|---|---|---|---|---|---|---|---|---|---|---|
| | | | | MD | CD | static | kinetic | MD | CD | MD | CD | |
| Example 1: BON / LDPE / tie / EVOH / tie / LDPE / HDPE-LDPE / EVA | 4.05 (0.261) | 77.47 (3.05) | 16.74 (1.08) | 613.178 (88,934) | 624.038 (90,509) | 0.25 | 0.27 | 66.79 (15.01) | 71.73 (16.12) | 11.8 | 11.1 | 18.9 (13.9) |
| Example 2: BON / LDPE / tie / EVOH / tie / LDPE / HDPE-LDPE / EVA | 4.28 (0.276) | 66.55 (2.62) | 24.03 (1.55) | 620.335 (89,972) | 539.142 (78,196) | 0.23 | 0.22 | 56.11 (12.61) | 48.86 (10.98) | 9.7 | 8.2 | 15.0 (11.0) |
| Example 3: BON / LDPE / HDPE-LDPE / LLDPE-tie / EVOH / LLDPE-tie / POP | 4.46 (0.288) | 66.55 (2.62) | 15.50 (1.00) | 747.157 (108,366) | 735.733 (106,709) | 0.20 | 0.18 | 55.40 (12.45) | 52.68 (11.84) | 20.9 | 21.2 | 18.6 (13.7) |
| Comparative Example 4: BON/LDPE/tie/ / EVOH / tie / LDPE / EVA | 8.37 (0.540) | 77.47 (3.06) | 21.86 (1.41) | 511.853 (74,238) | 519.561 (75,356) | 0.30 | 0.20 | 52.20 (11.73) | 46.99 (10.56) | 7.3 | 7.1 | 18.2 (13.4) |
| Example 5: BON / LDPE / tic / EVOH / tie / LDPE / HDPE-LDPE / EVA | 3.35 (0.216) | 66.55 (2.62) | 11.16 (0.72) | 636.455 (92,310) | 555.489 (80,567) | 0.26 | 0.24 | 61.36 (13.79) | 49.97 (11.23) | 16.2 | 13.6 | 20.1 (14.8) |
| | — | — | — | — | — | — | — | — | — | — | — | — |
| Comparative Example 7: PET / LDPE / Tie / EVOH / Tie / LDPE / OPP / EVA | 4.71 (0.304) | 77.47 (3.05) | 31.47 (2.03) | — | — | — | — | — | — | — | — | — |
| Comparative Example 8: PET / LDPE / tie / EVOH / tie / LDPE / OPP / EVA | 4.15 (0.268) | 83.31 (3.28) | 18.14 (1.17) | 1.148.121 (166,521 | 1,141,393 (165,545) | 0.23 | 0.18 | 76.80 (17.26). | 74.71 (16.79) | 17.2 | 16.4 | 19.4 (14.3) |
| Comparative Example 9: PET / LDPE / tie / EVOH / tie / LDPE / LDPE / EVA | 3.92 (0.253) | 81.28 (3.20) | 11.01 (0.71) | 1.057.325 (153,352) | 1,061,145 (153,906) | 0.25 | 0.21 | 55.62 (12.50) | 40.14 (9.02) | 13.2 | 13.0 | 16.5 (12.1) |
| Comparative Example 10: PET / LDPE / tie / EVOH / tie / LDPE / LDPE / EVA | 4.31 (0.278). | 85.34 (3.36) | 22.32 (1.44) | 798,771 (115,852) | 624,038 (111,674) | 0.25 | 0.19 | 37.38 (8.40) | 35.38 (7.95) | 10.4 | 10.7 | 12.6 (9.3) |

### Example 11

Packages were produced at commercial line speeds (i.e., 120 pkg/min), filled with 227 grams (8 ounces) of chunk cheddar cheese, and each sealed around a chunk of cheese. The packages had the structures as described in Table 2 below. Two of the package structure types were controls and one type was in accordance with Example 3 of the current invention.

**Table 2. Structure of multilayer film structures.**

| ID | Structure |
|---|---|
| Control 1 (Comparative Example 7) | 9.14 microns (36 gauge) PET / 14.4 g/m²(8.7 #/rm) EVOH Encap. (LDPE / Tie / EVOH / Tie / LDPE) /13.97 microns (55 gauge) OPP / 34.2 g m² (21 #/rm) EVA Sealant (18% VA, density 0.939 g/cm², 114.3 microns (4.5 mils)) |
| Control 2 | Overprint Varnish // (15.24 microns (60 gauge) BON / 13.3 g/m² (8.2#/rm) EVOH Encap. (LDPE / Tie / EVOH / Tie / LDPE) / 45.6 g/m² (28 #/rm) EVA Sealant |
| Example 3 | 12.19 microns (48 gauge) BON / 11.4 g/m² (7 #/rm) LDPE / 44.45 microns (1.75 mil) Blown Film (HDPE-LDPE / LLDPE-Tie / EVOH / LLDPE-Tie / POP |

The filled packages were initially inspected for package leakers by checking the tightness of the finished package. Packages that loosely fit the cheese product indicated a non hermetic seal or leakage. The filled packages were placed on a transportation simulator or Shaker Table for a 3.219 kilometor (2,000 mile) transportation simulation. The packages were then visually inspected for tightness of the package and stored at 4.4 °(140°F) for 180 days. Visual inspections were conducted at regular intervals until storage testing was complete. The packages were also tested for moisture vapor transmission rate (MVTR) and oxygen transmission rate (OTR). The results of the tests are displayed in Table 3 below. In summary, the Control 1 samples having a polyethylene terephthalate (PET) outer layer but without an interior moisture barrier layer had a MVTR of 4.54 g/m² (0.293 g/100 in²). per 24 hours and a good appearance after storage. In contrast, the Control 2 samples having a biaxially oriented nylon outer layer and no interior moisture barrier layer had a MVTR of 9.15 g/m² (0.590 g/100 in²). per 24 hours and a mottled appearance after storage. The Control 2 samples had an overprint varnish applied to the biaxially oriented nylon outer layer, however mottling of the nylon layer was still visible. The Example 3 samples did have some loose packages, but also a MVTR of 4.46 g/m² (0.288 g/100 in²). per 24 hours and a good appearance after storage. Accordingly, a MVTR of less than 9.15 g/m² (0.59 g/100 in²). per 24 hours would be required to prevent·a mottled appearance following storage at 4.4 °C (40° F) for about six months. Further, there was no visible change in the appearance of the multilayer films prepared according to an embodiment of the invention, when employed to package moisture containing products and following storage at 4.4°C (40° F) for at least about six months.

**Table 3. Barrier and storage test results of multilayer film structures.**

| Variable | MVTR (g/m²(g/100 in²) per 24 hours at 378°C100 °F and 90% RH) | OTR (cc/m² (cc/in²) at 85% RH in and out) | Initial Loose Packages (%) | Post Shipping Loose Packages (%) | Post Shaker Loose Packages (%) | Post Storage Appearance |
|---|---|---|---|---|---|---|
| Control 1 | 4.54 (0.293)) | 25.51 (1.646) | 0 | 0 | 0 | Good |
| Control 2 | 9.15 (0.590) | 21.86 (1.410) | 0 | 0 | 0 | Mottled |
| Example 3 | 4.46 (0.288) | 15.47 (0.998) | 2.78 | 2.78 | 13.89 | Good |

### Example 12

Packages were produced in accordance with Examples 1 and 2 above and filled with sliced cheese. The packages, 131 having the structure of Example 1 and 120 having the structure of Example 2, were shipped via truck over approximately 3.219 kilometers (2,000 miles) and then stored on a shelf at 4.4 °C (40 °F) for 180 days. Inspection of the packages following storage for 180 days resulted in one of the 131 Example 1 packages containing some visible mold on the cheese, which was a mold rate of 0.8%. The package also had a flex crack, which was potentially caused by unpacking and repacking of the package during the testing process. Inspection of the 120 Example 2 packages resulted in two packages containing some visible mold on the cheese, which was a mold rate of 3.3%. Of those two packages, one had a flex crack. The packages of Examples 1 and 2 also appeared good following the storage test, without mottling of the nylon layer.

The results of the tests described in Examples 11 and 12 illustrate that multilayer films containing high moisture products prepared according to the present invention, comprising an outer layer of polyamide, a layer of EVOH, a moisture barrier layer of blended HDPE and LDPE, and a sealant layer, may successfully be stored for about six months at 4.4 °C (40 °F without either the development of mottling of the nylon layer or the growth of mold on the high moisture product.

### Example 13

A seven layer multilayer film may be prepared having nylon as both outer and buried layers. The multilayer film may have the following structure: Nylon / EVOH / Nylon / Tie / LDPE Film / /LDPE-HDPE / EVA.

### Example 14

A seven layer multilayer film may be prepared comprising an encapsulated barrier structure. The multilayer film may have the following structure: 33.56 microns (1.4mil) (10% Nylon / 5% Nylon / 70% [58% EVOH-25% Nylon-17% Recycled trim from this film] / 5% Nylon / 10% Nylon) Film) / 24.41 g/m² (15 pounds per ream) LDPE-HDPE / 19.52 g/m² (12 pounds per ream). EVA.

### Example 15

A six layer multilayer film may be prepared, having a thickness of between about 76.2-101.6 microns (3.0 - 4.0 mils) and having both outer and buried nylon layers. The multilayer film may have the following structure: 10% Nylon / 5% EVOH / 5% Nylon / 5% Tie / 55% HDPE / 20% Sealant.

### Example 15

A six layer multilayer film may be prepared, having a thickness of between about 76.2-101.6 microns (3.0 - 4.0 mils) and having an outer nylon layer. The multilayer film may have the following structure: 20% Nylon / 7.5% EVOH / 7.5% Tie / 40% HDPE or Blend/ 25% Sealant. The HDPE layer may comprise a blend of 40% by weight HDPE and 60% by weight LDPE.

### Example 16

An eight layer multilayer film may be prepared comprising an encapsulated barrier structure. The multilayer film may have the following structure: 14.15 g/m² (8.7 pounds per ream) (16% Nylon / 30% EVOH / 16% Nylon / 5% Tie / 33% LDPE) / 13.97 microns (0.55 mils) OPP / 16.27 g/m² (10 pounds per ream) LDPE / 19.5 g/m² (12 pounds per ream) EVA.

While the invention has been described with respect to specific examples including presently preferred modes of carrying out the invention, those skilled in the art will appreciate that there are numerous variations and permutations of the above described structures that fall within the spirit and scope of the invention. It should be understood that the invention is not limited in its application to the details of construction and arrangements of the components set forth herein. Variations and modifications of the foregoing are within the scope of the present invention. It is also being understood that the invention disclosed and defined herein extends to all alternative combinations of two or more of the individual features mentioned or evident from the text. All of these different combinations constitute various alternative aspects of the present invention. The embodiments described herein explain the best modes known for practicing the invention and will enable others skilled in the art to utilize the invention. The claims are to be construed to include alternative embodiments to the extent permitted by the prior art. It is therefore contemplated that such modifications can be made without departing from the spirit or scope of the present invention as defined in the appended claims.

## Claims

1. A package comprising a moisture containing product and a package film for moisture containing products, the package film comprising a polyamide layer, an ethylene vinyl alcohol (EVOH) layer, a moisture barrier layer comprising a blend of high density polyethylene (HDPE) and low density polyethylene (LDPE), and a sealant layer, wherein the moisture barrier layer is disposed between the sealant layer and the polyamide and EVOH layers, wherein the package film has a thickness of less than 88.9 microns (3.5 mils) and wherein the package film has a moisture vapor transmission rate (MVTR) at 37.8 °C (100 °F) and 90% relative humidity of less than 9.15 g/m² (0.59 g/100 in²) per 24 hours.

2. The package of claim 1, wherein the moisture barrier layer is present in an amount of at least 16.27 g/m² (10 pounds per ream).

3. The package of claim 1 or 2, wherein the package film has a MVTR at 37.8 °C (100 °F) and 90% relative humidity of less than or equal to 6.98 g/m² (0.45 g/100 in²) per 24 hours.

4. The package of any one of claims 1 - 3, wherein the package film has a MVTR at 37.8 °C (100 °F) and 90% relative humidity of less than or equal to 4.65 g/m² (0.30 g/100 in 2) per 24 hours.

5. The package of any one of claims 1 - 4, wherein the moisture barrier layer comprises a high moisture barrier HDPE, and wherein the moisture barrier layer has a thickness of less than 20.3 microns (0.8 mils).

6. The package of any one of claims 1 - 5, wherein the moisture barrier layer comprises at least 30% HDPE.

7. The package of any one of claims 1 - 6, wherein the polyamide is biaxially oriented nylon.

8. The package of any one of claims 1 - 7, wherein the moisture barrier layer comprises between 30% and 45% of the total film thickness.

9. The package of any one of claims 1 - 8, wherein the polyamide is provided by an encapsulated barrier structure comprising a buried layer comprising EVOH, the buried layer encapsulated by at least two polyamide layers.

10. The package of any one of claims 1 - 9, further comprising a layer of linear low density polyethylene (LLDPE).

11. The package of any one of claims 1 - 10, wherein the moisture containing product is cheese.

12. The package of any one of claims 1 - 11, wherein the sealant layer comprises ethylene vinyl acetate (EVA).

13. The package of any one of claims 1 - 12, wherein the moisture barrier layer has a thickness of between 20.3 and 33.0 microns (0.8 and 1.3 mils).

14. The package of any one of claims 1 - 13, wherein the moisture containing product comprises between 25% and 50% by weight moisture.

## Patentansprüche

1. Verpackung, umfassend ein feuchtigkeitshaltiges Produkt und eine Verpackungsfolie (Verpackungsfilm) für feuchtigkeitshaltige Produkte, wobei die Verpackungsfolie umfasst: eine Polyamidschicht, eine EthylenVinylalkohol (EVOH)-Schicht, eine Dampfsperrschicht (Feuchtigkeitssperrschicht), welche eine Mischung von Polyethylen hoher Dichte (HDPE) und Polyethylen niedriger Dichte (LDPE) umfasst, und eine Abdichtungsschicht (Versiegelungsschicht), wobei die Dampfsperrschicht zwischen der Abdichtungsschicht und den Polyamid- und EVOH-Schichten angeordnet ist, wobei die Verpackungsfolie eine Dicke von weniger als 88,9 Mikron (3,5 Mils) aufweist und wobei die Verpackungsfolie eine Wasserdampfdurchlässigkeit (MVTR) bei 37,8 °C (100 °F) und 90 % relativer Luftfeuchte von weniger als 9,15 g/m² (0,59 g/100 in²) in 24 Stunden aufweist.

2. Verpackung nach Anspruch 1, wobei die Dampfsperrschicht in einer Menge von mindestens 16,27 g/m² (10 Pfund pro Ries) vorliegt.

3. Verpackung nach Anspruch 1 oder 2, wobei die Verpackungsfolie eine MVTR bei 37,8 °C (100 °F) und 90 % relativer Luftfeuchte von weniger als oder gleich 6,98 g/m² (0,45 g/100 in²) in 24 Stunden aufweist

4. Verpackung nach einem der Ansprüche 1 bis 3, wobei die Verpackungsfolie eine MVTR bei 37,8 °C (100 °F) und 90 % relativer Luftfeuchte von weniger als oder gleich 4,65 g/m² (0,30 g/100 in²) in 24 Stunden aufweist

5. Verpackung nach einem der Ansprüche 1 bis 4, wobei die Dampfsperrschicht ein HDPE mit hohen Dampfsperreigenschaften umfasst und wobei die Dampfsperrschicht eine Dicke von weniger als 20,3 Mikron (0,8 Mils) aufweist.

6. Verpackung nach einem der Ansprüche 1 bis 5, wobei die Dampfsperrschicht mindestens 30 % HDPE umfasst.

7. Verpackung nach einem der Ansprüche 1 bis 6, wobei das Polyamid biaxial orientiertes Nylon ist.

8. Verpackung nach einem der Ansprüche 1 bis 7, wobei die Dampfsperrschicht eine Dicke zwischen 30 % und 45 % der Gesamtfilmdicke umfasst.

9. Verpackung nach einem der Ansprüche 1 bis 8, wobei das Polyamid durch eine verkapselte Barrierestruktur bereitgestellt wird, welche eine eingebettete, EVOH umfassende Schicht umfasst, wobei die eingebettete Schicht durch mindestens zwei Polyamidschichten verkapselt bzw. umgeben ist.

10. Verpackung nach einem der Ansprüche 1 bis 9, weiterhin umfassend eine Schicht von linearem Polyethylen niedriger Dichte (LLDPE).

11. Verpackung nach einem der Ansprüche 1 bis 10, wobei das feuchtigkeitshaltige Produkt Käse ist.

12. Verpackung nach einem der Ansprüche 1 bis 11, wobei die Abdichtungsschicht Ethylenvinylacetat (EVA) umfasst.

13. Verpackung nach einem der Ansprüche 1 bis 12, wobei die Dampfsperrschicht eine Dicke zwischen 20,3 und 33,0 Mikron (0,8 und 1,3 Mils) aufweist.

14. Verpackung nach einem der Ansprüche 1 bis 13, wobei das feuchtigkeitshaltige Produkt eine Feuchtigkeit zwischen 25 und 50 Gew.-% umfasst.

## Revendications

1. Emballage comprenant un produit contenant de l'humidité et un film d'emballage pour des produits contenant de l'humidité, le film d'emballage comprenant une couche de polyamide, une couche d'éthylène-alcool vinylique (EVOH), une couche faisant barrière à l'humidité comprenant un mélange de polyéthylène haute densité (PEHD) et de polyéthylène basse densité (PEBD), et une couche d'agent d'étanchéité, dans lequel la couche faisant barrière à l'humidité est disposée entre la couche d'agent d'étanchéité et les couches de polyamide et de VEOH, dans lequel le film d'emballage a une épaisseur inférieure à 88,9 micromètres (3,5 mil) et dans lequel le film d'emballage a une vitesse de transmission de vapeur d'eau (MVTR) à 37, 8°C (100°F) et à une humidité relative de 90 % inférieure à 9,15 g/m² (0,59 g/100 in²) par 24 heures.

2. Emballage suivant la revendication 1, dans lequel la couche faisant barrière à l'humidité est présente en une quantité d'au moins 16,27 g/m² (10 lb/rame).

3. Emballage suivant la revendication 1 ou 2, dans lequel le film d'emballage a une MVTR à 37,8°C (100°F) et à une humidité relative de 90 % inférieure ou égale à 6,98 g/m² (0,45 g/100 in²) par 24 heures.

4. Emballage suivant l'une quelconque des revendications 1 à 3, dans lequel le film d'emballage a une MVTR à 37,8°C (100°F) et à une humidité relative de 90 % inférieure ou égale à 4,65 g/m² (0,30 g/100 in²) par 24 heures.

5. Emballage suivant l'une quelconque des revendications 1 à 4, dans lequel la couche faisant barrière à l'humidité comprend un PEHD faisant fortement barrière à l'humidité, et dans lequel la couche faisant barrière à l'humidité a une épaisseur inférieure à 20,3 micromètres (0, 8 mil) .

6. Emballage suivant l'une quelconque des revendications 1 à 5, dans lequel la couche faisant barrière à l'humidité comprend au moins 30 % de PEHD.

7. Emballage suivant l'une quelconque des revendications 1 à 6, dans lequel le polyamide est un Nylon à orientation biaxiale.

8. Emballage suivant l'une quelconque des revendications 1 à 7, dans lequel la couche faisant barrière à l'humidité représente 30 % à 45 % de l'épaisseur totale du film.

9. Emballage suivant l'une quelconque des revendications 1 à 8, dans lequel le polyamide est fourni par une structure faisant barrière encapsulée comprenant une couche enfouie comprenant du EVOH, la couche enfouie étant encapsulée par au moins deux couches de polyamide.

10. Emballage suivant l'une quelconque des revendications 1 à 9, comprenant en outre une couche de polyéthylène linéaire basse densité (PELBD).

11. Emballage suivant l'une quelconque des revendications 1 à 10, dans lequel le produit contenant de l'humidité est le fromage.

12. Emballage suivant l'une quelconque des revendications 1 à 11, dans lequel la couche d'agent d'étanchéité comprend un éthylène-acétate de vinyle (EVA).

13. Emballage suivant l'une quelconque des revendications 1 à 12, dans lequel la couche faisant barrière à l'humidité a une épaisseur comprise entre 20,3 et 33,0 micromètres (0,8 à 1,3 mil).

14. Emballage suivant l'une quelconque des revendications 1 à 13, dans lequel le produit contenant de l'humidité comprend 25 % à 50 % en poids d'humidité.
